# EUROPÄISCHE PATENTSCHRIFT

(11) **EP 2 068 064 B1**
(45) Veröffentlichungstag und Bekanntmachung des Hinweises auf die Patenterteilung: **19.12.2018**
(21) Anmeldenummer: 08018461.7
(22) Anmeldetag: 22.10.2008
(51) Int. Cl.: F16L 33/08

(54) **Schneckengewindeschelle**
Worm drive hose clip
Collier de serrage de moyeu d'entraînement

(30) Priorität: 04.12.2007 DE 102007058319
(43) Veröffentlichungstag der Anmeldung: 10.06.2009
(73) Patentinhaber: NORMA Germany GmbH, 63477 Maintal (DE)
(72) Erfinder: Walker, Jason, 63454 Hanau (DE); Krauß, Mathias, 61130 Nidderau (DE)
(74) Vertreter: Patentanwälte Olbricht Buchhold Keulertz

(56) Entgegenhaltungen:
- EP-A2- 1 351 005
- DE-C1- 19 633 435
- US-A- 3 351 989

## Beschreibung

Die Erfindung betrifft eine Schneckengewindeschelle mit einem Spannband, das in Umfangsrichtung einander überlappende Endabschnitte aufweist, einem mit dem radial inneren Endabschnitt verbundenen Gehäuse und einer im Gehäuse angeordneten Spannschraube, die mit Gewindeelementen am radial äußeren Endabschnitt in Eingriff steht, wobei der radial innere Endabschnitt mit einer Brücke in Umfangsrichtung über das Gehäuse übersteht.

Eine derartige Schneckengewindeschelle ist beispielsweise aus DE 196 33 435 C1 bekannt.

EP 1351 005 A2 beschreibt eine Schneckengewindeschelle mit einem Spannband, einem Gehäuse und einer Spannschraube. Das Gehäuse ist an einem radial inneren Endabschnitt befestigt, welcher über das Gehäuse übersteht und eine Brücke bildet. Die Brücke weist zwei Sicken auf, die der Befestigung des Gehäuses dienen und eine Versteifung des Bereichs der Brücke bewirken. Zur einfacheren Ausformung der Sicken sind Öffnungen an einem Ende der Sicken vorgesehen. Diese Öffnungen sind im montierten Zustand vom Gehäuse abgedeckt und befinden sich somit nicht im Bereich der Brücke.

US 3 351 989 A1 zeigt ebenfalls eine Schneckengewindeschelle der eingangs genannten Art. Dabei weist die Schneckengewindeschelle eine Brücke auf, die in Umfangsrichtung über das Gehäuse übersteht. Im Bereich der Brücke ist eine kreisförmige Ausnehmung vorgesehen.

Das Gehäuse einer Schneckengewindeschelle sollte auf der radialen Innenseite des Spannbandes bündig mit dem Spannband abschließen, damit ein mit Hilfe der Schneckengewindeschelle zu befestigendes Bauteil, beispielsweise ein Schlauch, über den gesamten Umfang möglichst gleichmäßig mit Druck beaufschlagt wird. Das Gehäuse weist hierbei vielfach einen Haltesteg auf, der auf der radialen Innenseite des radial inneren Endabschnitts angeordnet ist. Die Brücke, also der Teil des radial inneren Endabschnitts, der zum Ende des radial inneren Endabschnitts aus dem Gehäuse herausragt oder über das Gehäuse übersteht, dient als Gegenlager für den Spannkopf, der das Gehäuse und die Spannschraube aufweist. Damit ein Absatz auf der Innenseite des Spannbandes möglichst weich ist und Beschädigungen eines Schlauchs möglichst ausschließt, endet die Brücke in einer gewissen Entfernung vom Gehäuse. Allerdings ergibt sich dadurch eine Materialdopplung des Spannbandes im dem Bereich, wo die Brücke und der radial äußere Endabschnitt des Spannbandes übereinanderliegen. Durch diese Materialdopplung leidet die Biegesteifigkeit und somit auch das Anformverhalten des Sehellenbandes am Schlauch. Dies macht sich besonders bei kleinerem Nenndurchmesser negativ bemerkbar, insbesondere im Hinblick auf die Dichtigkeit einer mit der Schlauchsehelle gesicherten Verbindung zwischen einem Schlauch und einem Stutzen. In einem Extremfall könnte die Brücke sogar das Anformen des Sehellenbandes an den Schlauch verhindern. Die Schneckengewindeschelle blockiert dann, bevor sie den zum Spannen benötigten Durchmesser erreicht hat. Dies hat einen Ausfall des Verbindungssystems zur Folge und birgt auch ein erhöhtes Verletzungsrisiko für den Werker in sich, da das Drehmoment beim Spannen der Schneckengewindeschelle ansteigt, die Schneckengewindeschelle jedoch nicht durch den Schlauch gegen eine Verdrehung gehemmt wird. Das komplette Moment muss durch Festhalten der Schneckengewindeschelle vom Werker aufgefangen werden.

Es ist bekannt, die Biegesteifigkeit der Brücke abschnittsweise durch Quersicken zu vermindern. Allerdings ist der Werkzeugverschleiß bei der Ausbildung mit Quersicken relativ groß. Darüber hinaus spielt die Materialhärte des Schellenbandes hier eine große Rolle.

Der Erfindung liegt die Aufgabe zugrunde, mit geringem Aufwand eine Schneckengewindeschelle mit guter Verarbeitbarkeit zu schaffen.

Diese Aufgabe wird bei einer Schneckengewindeschelle der eingangs genannten Art dadurch gelöst, dass die Brücke einen umschlossenen Schwächungsbereich aufweist.

Durch den Schwächungsbereich wird die Biegesteifigkeit der Brücke vermindert. Der Schwächungsbereich geht allerdings an keiner Stelle bis zu einem Rand der Brücke durch, so dass die Außenkontur der Brücke im Verhältnis zu einer Brücke ohne Schwächungsbereich unverändert erhalten bleibt. Dadurch kann man beispielsweise erreichen, dass keine störenden Kanten oder dergleichen vorhanden sind, die die Herstellung oder die Handhabung der Schneckengewindeschelle negativ beeinflussen könnten. Das Leerlaufdrehmoment wird bis zum Kleinstdurchmesser der Schneckengewindeschelle auf einem sehr niedrigen und vor allem gleichbleibenden Niveau gehalten, was sich positiv auf die Spannkraft der Schneckengewindeschelle auswirkt. Auch die Streuung des Drehmoments wird auf ein Minimum reduziert. Die Montagefreundlichkeit der Schelle steigt und das Verletzungsrisiko für einen Werker wird vermindert.

Erfindungsgemäß ist die Brücke zumindest auf ihrer radialen Innenseite mit Querrillen versehen. Auch die Querrillen setzen die Biegesteifigkeit der Brücke herab. Da insbesondere bei der Ausbildung des Schwächungsbereichs als Durchbrechung weniger Material verformt werden muss, um die Querrillen herzustellen, ist der Werkzeugverschleiß geringer.

Vorzugsweise ist der Schwächungsbereich als Querschnittsreduzierung ausgebildet. Im Schwächungsbereich hat die Brücke also weniger Material, das einer Verformung einen Widerstand entgegensetzen könnte.

Vorteilhafterweise ist der Schwächungsbereich als Durchbrechung ausgebildet. In der Durchbrechung fehlt also Material der Brücke, so dass dieses Material der Verformung der Brücke keinen Widerstand mehr entgegensetzt. Die Durchbrechung ist aber in Umfangsrichtung vollständig umschlossen, also nicht zum Ende des Schellenbandes hin offen, so dass die mit der Durchbrechung versehene Brücke im Prinzip genauso gehandhabt werden kann, wie eine herkömmliche Brücke bei einer Schneckengewindeschelle Vorzugsweise ist der Schwächungsbereich durch eine Begrenzung begrenzt, die parallel zur Außenkontur der Brücke verläuft. Die Brücke weist also an ihrem umlaufenden Rand einen Steg mit etwa gleichbleibender Dicke auf. Der Begriff "parallel" ist hier nicht im mathematisch exakten Sinn zu verstehen. Kleinere Abweichungen von der Parallelität sind ohne weiteres zulässig. Der Schwächungsbereich hat im Prinzip eine verkleinerte Form der Form der Brücke. Damit lässt sich das Verformungsverhalten der Brücke auf einfache Weise gut steuern.

Vorzugsweise weist die Brücke Seitenflanken auf, von denen mindestens eine relativ zur Umfangsrichtung abgeschrägt ist. Auch dadurch lässt sich die Biegesteifigkeit vermindern. Die Brücke wird zu ihrem freien Ende hin, also dem dem Gehäuse abgewandten Ende, immer schmaler, so dass die Biegesteifigkeit zum freien Ende hin abnimmt. In Verbindung mit dem Schwächungsbereich lässt sich hier ein so kleiner Verformungswiderstand realisieren, dass das Leerlaufdrehmoment über den kompletten Anzug der Spannschraube im Wesentlichen gleich gehalten werden kann.

Vorzugsweise weist die Brücke eine Spitze auf, die von innen an einem axialen Randbereich des radial äußeren Endabschnitts anliegt. Durch das Einbringen der Gewindeelemente in den radial äußeren Endabschnitt können sich unter ungünstigen Umständen auch Verformungen auf der radialen Innenseite des radial äußeren Endabschnitts ergeben, der ein Verschieben des freien Endes der Brücke gegenüber dem radial äußeren Endabschnitt erschwert. Die Gewindeelemente befinden sich jedoch in der axialen Mitte des Spannbandes. Ein axialer Randbereich bleibt frei von Gewindeelementen. Wenn nun die Spitze der Brücke an diesem freien und damit glatten Randbereich anliegt, dann können die Gewindeelemente das Vorschieben des freien Endes der Brücke und damit das Spannen der Schneckengewindeschelle nicht behindern.

Vorzugsweise ist die Spitze an dem axialen Randbereich angeordnet, an dem der radial äußere Endabschnitt einen Einführvorsprung aufweist. Man kann dann die Spitze der Brücke zusätzlich verwenden, um den radial äußeren Endabschnitt des Spannbandes in den Spannkopf einzufädeln. Der Einführvorsprung wird durch die Spitze der Brücke und nachfolgend die Brücke selbst geführt.

Vorzugsweise lassen die Querrillen zumindest einen Teil des Schwächungsbereichs frei. Dies ist insbesondere dann von Vorteil, wenn der Schwächungsbereich dreieckförmig ausgebildet ist. In diesem Fall ist die Verminderung der Biegesteifigkeit durch den Schwächungsabschnitt ausreichend, so dass es keiner zusätzlichen Querrillen bedarf.

Die Erfindung wird im Folgenden anhand von zwei bevorzugten Ausführungsbeispielen in Verbindung mit der Zeichnung beschrieben. Hierin zeigen:
- Fig. 1: eine perspektivische Ansicht einer Schnecken- gewindeschelle,
- Fig. 2: einen vergrößerten Ausschnitt II aus Fig. 1 und
- Fig. 3: eine abgewandelte Ausführungsform einer abgewickelten Schneckengewindeschelle.

Eine Schneckengewindeschelle 1 weist ein Spannband 2 mit zwei Endabschnitten 3, 4 auf. Die beiden Endabschnitte 3, 4 überlappen sich, so dass sich ein radial äußerer Endabschnitt 3 und ein radial innerer Endabschnitt 4 ergibt. Das Spannband 2 ist etwa kreisförmig gebogen, so dass es im Prinzip einen Zylinder bildet. Die nachfolgenden Richtungsangaben axial, radial und Umfangsrichtung beziehen sich daher auf den genannten Zylinder.

Ein Spannkopf 5 weist ein mit dem radial inneren Endabschnitt 4 verbundenes Gehäuse 6 und eine Spannschraube 7 auf. Die Spannschraube 7 ist im Gehäuse 6 unverlierbar gehalten und steht in Eingriff mit Gewindeelementen 8 auf der Umfangsfläche des Spannbandes 2. Hierzu ist der radial äußere Endabschnitt 3 zwischen dem radial inneren Endabschnitt 4 und die Spannschraube 7 geführt. Durch Drehen der Spannschraube 7 wird der radial äußere

Endabschnitt 3 bewegt, so dass sich der Innendurchmesser der Schneckengewindeschelle 1 verändert.

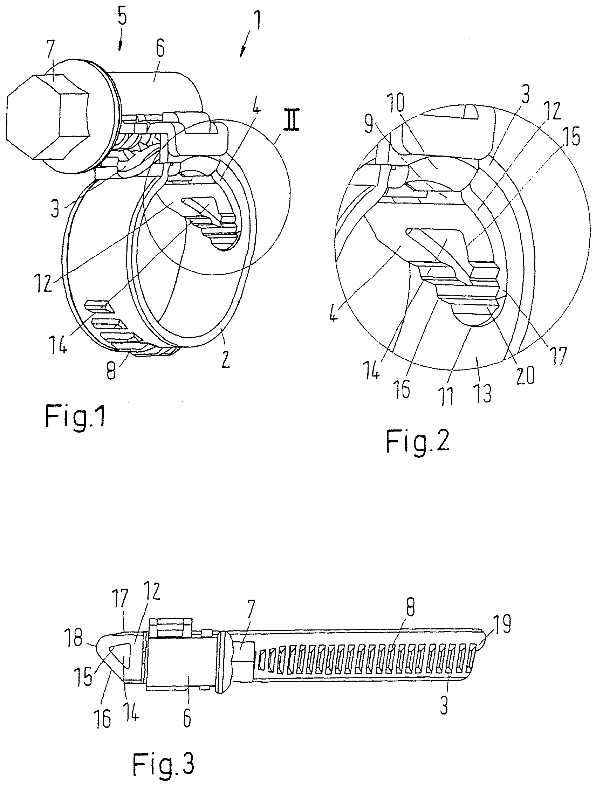

Wie insbesondere aus Fig. 2 zu erkennen ist, bildet der radial innere Endabschnitt 4 eine Ausformung 9 mit etwa U-förmigem Querschnitt, in der ein Steg 10 des Gehäuses 6 so angeordnet ist, dass die radiale Innenseite des Steges 10 etwa bündig mit der radialen Innenseite des radial inneren Endabschnitts 4 abschließt.

Der radial innere Endabschnitt 4 ragt zu seinem freien Ende 11 hin über den Steg 10 hinaus und bildet dadurch eine sogenannte Brücke 12. Die Ausformung 9 dient als Gegenlager zum Halten des Spannkopfes 5.

Die Brücke 12 liegt beim Spannen an der radialen Innenseite 13 des radial äußeren Endabschnitts 3 an. Dort, wo sich die Brücke 12 befindet, ergibt sich eine Materialdopplung des Spannbandes 2.

Um trotz dieser Materialdopplung ein zufriedenstellendes Anformen des Spannbandes 2 an einen Schlauch zu er- möglichen, wenn der Schlauch auf einem Stutzen befestigt wird, weist die Brücke 12 einen Schwächungsbereich 14 in Form einer allseitig umschlossenen Durchbrechung auf. Die Außenkontur der Brücke 12 ist also gegenüber einer Brücke ohne Schwächungszone 14 unverändert. Dadurch ergeben sich bei der Handhabung der neuen Schneckengewindeschelle 1 keine Unterschiede zu bisher bekannten Schneckengewindeschellen mit anderer Ausbildung der Brücke.

Durch die Ausbildung der Brücke mit der Ausnehmung ergibt sich eine wesentlich verminderte Biegesteifigkeit der Brücke, so dass die Brücke beim Anziehen der Spannschraube 7, also beim Spannen der Schneckengewindeschelle 1, ein relativ kleines Leerlaufdrehmoment aufweist, das bis zum kleinsten Durchmesser der Schneckengewindeschelle 1 auf einem gleichbleibenden Niveau gehalten werden kann. Dies wirkt sich positiv auf die Spannkraft der Schneckengewindeschelle 1 aus. Auch die Streuung des Leerlaufdrehmoments wird auf ein Minimum reduziert. Dadurch wird die Verarbeitbarkeit der Schneckengewindeschelle 1 verbessert, weil weniger Kraft erforderlich ist, um die Schneckengewindeschelle bis zum Erzeugen der eigentlichen Spannkraft zu spannen.

Der Schwächungsbereich 14 ist von einer Begrenzung 15 begrenzt, die etwa parallel zur Außenkontur der Brücke 12 verläuft, d.h. die Schwächungszone 14 ist ein verkleinertes Abbild der Brücke 12.

Im vorliegenden Ausführungsbeispiel ist, wie aus Fig. 2 zu erkennen ist, die Brücke 12 etwa dreieckförmig aus- gebildet. Das freie Ende 11 bildet eine Spitze. Dementsprechend ist auch der Schwächungsbereich 14 etwa dreieckförmig ausgebildet. Die Brücke 12 weist also zwei Seitenflanken 16, 17 auf, die gegenüber der Umfangsrichtung des Spannbandes 2 einen Winkel einschließen, also abgeschrägt sind.

Beim Spannen der Schneckengewindeschelle 1 liegt das freie Ende 11, also die Spitze, an der radialen Innenseite 13 des radial äußeren Endabschnitts 3 an. Dies ist unproblematisch, solange diese radiale Innenseite 13 glatt ausgebildet ist, wie dies beim Ausführungsbei spiel der Fig. 1 und 2 der Fall ist.

Fig. 3 zeigt eine abgewandelte Ausführungsform, bei der gleiche und einander entsprechende Elemente mit den gleichen Bezugszeichen versehen sind. Dargestellt ist die Schneckengewindeschelle 1 in einem Zustand, beidem der radial äußere Endabschnitt 3 aus dem Gehäuse 6 herausgezogen worden ist. Das Spannband 2 ist abgewickelt.

Die Brücke 12 weist diesmal nur eine einzelne abgeschrägte Seitenflanke 16 auf. Dadurch wird eine Spitze 18 gebildet, die von innen an dem radial äußeren Endabschnitt 3 in einem Bereich axial außerhalb der Gewindeelemente 8 anliegt. In diesem Fall ist es relativ unkritisch, wenn sich bei der Einformung der Gewindeelemente 8, beispielsweise durch Prägen, entsprechende Vorsprünge auf der radialen Innenseite des radial äußeren Endabschnitts 3 ergeben.

Der radial äußere Endabschnitt 3 weist einen Einfädelvorsprung 19 auf, der am gleichen axialen Rand angeordnet ist wie die Spitze 18 auch. Wenn der radial äußere Endabschnitt 3 in das Gehäuse 6 eingeführt werden soll, dann wird der Einfädelvorsprung 19 über die größtmögliche Länge auf der Brücke 12 geführt.

Die Brücke 12 kann, wie dies aus Fig. 1 und 2 zu erkennen ist, auf ihrer radialen Innenseite mit Querrillen 20 versehen sein. Diese Querrillen 20 beschränken sich allerdings auf einen Bereich, wo die Brücke 12 nicht ihre volle Breite erreicht hat. Diese Querrillen 20 überdecken den Schwächungsbereich 14 nur teilweise. Man kann sogar vorsehen, dass die Querrillen 20 den Schwächungsbereich 14 vollkommen freilassen. Da hier nur wenig Material verformt werden muss, hält sich der Werkzeugverschleiß beim Herstellen der Querrillen 20 in Grenzen.

## Patentansprüche

1. Schneckengewindeschelle (1) mit einem Spannband (2), das in Umfangsrichtung einander überlappende Endabschnitte (3, 4) aufweist, einem mit dem radial inneren Endabschnitt (4) verbundenen Gehäuse (6) und einer im Gehäuse (6) angeordneten Spannschraube (7), die mit Gewindeelementen (8) am radial äußeren Endabschnitt (3) in Eingriff steht, wobei der radial innere Endabschnitt (4) mit einer Brücke (12) in Umfangsrichtung über das Gehäuse (6) übersteht und die Brücke (12) einen umschlossenen Schwächungsbereich (14) aufweist, **dadurch gekennzeichnet, dass** die Brücke (12) zumindest auf ihrer radialen Innenseite mit Querrillen (20) versehen ist.

2. Schneckengewindeschelle (1) nach Anspruch 1, **dadurch gekennzeichnet, dass** der Schwächungsbereich (14) als Querschnittsreduzierung ausgebildet ist.

3. Schneckengewindeschelle (1) nach Anspruch 1 oder 2, **dadurch gekennzeichnet, dass** der Schwächungsbereich (14) als Durchbrechung ausgebildet ist.

4. Schneckengewindeschelle (1) nach einem der Ansprüche 1 bis 3, **dadurch gekennzeichnet, dass** der Schwächungsbereich (14) durch eine Begrenzung (15) begrenzt ist, die parallel zur Außenkontur der Brücke (12) verläuft.

5. Schneckengewindeschelle (1) nach einem der Ansprüche 1 bis 4, **dadurch gekennzeichnet, dass** die Brücke (12) Seitenflanken (16, 17) aufweist, von denen mindestens eine relativ zur Umfangsrichtung abgeschrägt ist.

6. Schneckengewindeschelle (1) nach einem der Ansprüche 1 bis 5, **dadurch gekennzeichnet, dass** die Brücke (12) eine Spitze (18) aufweist, die von innen an einem axialen Randbereich des radial äußeren Endabschnitts (3) anliegt.

7. Schneckengewindeschelle nach Anspruch 6, **dadurch gekennzeichnet, dass** die Spitze (18) an dem axialen Randbereich angeordnet ist, an dem der radial äußere Endabschnitt (3) einen Einführvorsprung (19) aufweist.

8. Schneckengewindeschelle (1) nach Anspruch 1, **dadurch gekennzeichnet, dass** die Querrillen (20) zumindest einen Teil des Schwächungsbereichs (14) freilassen.

## Claims

1. Worm-drive hose clip (1) with a tension strap (2) having end sections (3, 4) arranged to overlap each other in a circumferential direction, a housing (6) connected to the radially inner end section (4) and a tension screw (7) arranged in the housing (6), said screw engaging with thread elements (8) on the radially outer end section (3), wherein the radially inner end section (4) with a bridge (12) projects in a circumferential direction from the housing (6) and the bridge (12) has an enclosed weakening area (14), **characterised in that** the bridge (12) is provided with transverse grooves (20) at least on its radial inside.

2. Worm-drive hose clip (1) according to claim 1, **characterised in that** the weakening area (14) is configured as cross-sectional reduction.

3. Worm-drive hose clip (1) according to claim 1 or 2, **characterised in that** the weakening area (14) is configured as break-out.

4. Worm-drive hose clip (1) according to any one of claims 1 to 3, **characterised in that** the weakening area (14) is bounded by a boundary (15) running parallel to the external contour of the bridge (12).

5. Worm-drive hose clip (1) according to any one of claims 1 to 4, **characterised in that** the bridge (12) has side faces (16, 17), at least one of which is slanted relative to the circumferential direction.

6. Worm-drive hose clip (1) according to any one of claims 1 to 5, **characterised in that** the bridge (12) has a tip (18), which lies from inside against an axial edge area of the radially outer end section (3).

7. Worm-drive hose clip according to claim 6, **characterised in that** the tip (18) is arranged on the axial edge area, on which the radially outer end section (3) has an insertion projection (19).

8. Worm-drive hose clip (1) according to claim 1, **characterised in that** the transverse grooves (20) leave at least a part of the weakening area (14) free.

## Revendications

1. Collier de serrage à vis tangente (1) avec un collier de serrage (2) qui comporte des tronçons terminaux (3, 4) se chevauchant en direction circonférentielle, avec un logement (6) relié au tronçon terminal radialement intérieur (4) et avec une vis de serrage (7) qui est agencée dans le logement (6) et qui est en prise avec des éléments filetés (8) au niveau du tronçon terminal radialement extérieur (3), dans lequel le tronçon terminal radialement intérieur (4) dépasse du logement (6) en direction circonférentielle avec un pont (12) et dans lequel le pont (12) comporte une zone de faiblesse (14) entourée, **caractérisé en ce que** le pont (12) est muni de rainures transversales (20) au moins sur son côté intérieur radial.

2. Collier de serrage à vis tangente (1) selon la revendication 1, **caractérisé en ce que** la zone de faiblesse (14) est réalisée sous forme de réduction de section transversale.

3. Collier de serrage à vis tangente (1) selon la revendication 1 ou 2, **caractérisé en ce que** la zone de faiblesse (14) est réalisée sous forme de perforations.

4. Collier de serrage à vis tangente (1) selon l'une quelconque des revendications 1 à 3, **caractérisé en ce que** la zone de faiblesse (14) est délimitée par une délimitation (15) qui s'étend parallèlement au contour extérieur du pont (12).

5. Collier de serrage à vis tangente (1) selon l'une quelconque des revendications 1 à 4, **caractérisé en ce que** le pont (12) a des flancs latéraux (16, 17) dont au moins l'un est incliné par rapport à la direction circonférentielle.

6. Collier de serrage à vis tangente (1) selon l'une quelconque des revendications 1 à 5, **caractérisé en ce que** le pont (12) a une pointe (18) qui s'appuie de l'intérieur contre une zone marginale axiale du tronçon terminal radialement extérieur (3).

7. Collier de serrage à vis tangente selon la revendication 6, **caractérisé en ce que** la pointe (18) est agencée au niveau de la zone marginale axiale au niveau de laquelle le tronçon terminal radialement extérieur (3) comporte une partie en saillie d'introduction (19).

8. Collier de serrage à vis tangente (1) selon la revendication 1, **caractérisé en ce que** les rainures transversales (20) laissent libre au moins une partie de la zone de faiblesse (14).
